# EUROPÄISCHE PATENTANMELDUNG

(11) **EP 3 243 863 A1**
(43) Veröffentlichungstag der Anmeldung: **15.11.2017**
(21) Anmeldenummer: 16168681.1
(22) Anmeldetag: 09.05.2016
(51) Int. Cl.: C08J 9/00, C08G 18/12, C08G 18/42, C09J 153/00, C09J 175/06

(54) **VERWENDUNG VON BLOCK-COPOLYMEREN IN KLEBSTOFFEN**

(71) Anmelder: Evonik Degussa GmbH, 45128 Essen (DE)
(72) Erfinder: Kolb, Nicolai, 45657 Recklinghausen (DE); Brenner, Gabriele, 48249 Dülmen (DE); Glöckner, Patrick, 45721 Haltern am See (DE); Schleimer, Bernhard, 45770 Marl (DE)

(57) **Zusammenfassung**

Die vorliegende Erfindung betrifft die Verwendung von Block-Copolymeren aus OH-funktionalisierten Polyolefinen und Polyestern in Kleb- oder Dichtstoffen und Kleb- oder Dichtstoffe enthaltend die genannten Block-Copolymere.

## Beschreibung

Die vorliegende Erfindung betrifft die Verwendung von Block-Copolymeren auf Basis von OH-, COOH-oder Amino-funktionalisierten Polymeren, bevorzugt Polyolefinen, und Polyestern in Kleb- oder Dichtstoffen und Kleb- oder Dichtstoffe enthaltend die genannten Block-Copolymere.

Polyester- und Polyether-Polyole werden heute vielfach als Rohstoffe genutzt, unter anderem zur Herstellung von Kleb- und Dichtstoffen. Diese Kleb- und Dichtstoffe können beispielsweise thermoplastische oder reaktive Schmelzklebstoffe, 1 K- oder 2K- Flüssigklebstoffe, oder Epoxysysteme sein. Für reaktive Klebstoffsysteme werden die Polyole beispielsweise in der Regel mit Diisocyanaten zu reaktiven, feuchtigkeitshärtenden Polymeren umgesetzt. Die Substrate werden üblicherweise als Schmelze aufgetragen und besitzen eine Anfangsfestigkeit. Durch die reaktiven Endgruppen erfolgt eine Reaktion mit der Luftfeuchtigkeit, sodass das Polymer weiter aushärtet und anschließend nicht mehr oder nur sehr schwer aufgeschmolzen werden kann.

Derartige feuchtigkeitshärtende Schmelzklebstoffe zeichnen sich durch eine schnelle Aushärtung sowie eine hohe Formulierungsflexibilität und ein breites Anwendungsspektrum aus. So können beispielsweise Holz, Textilien oder Metalle sehr gut verklebt werden. Ein Nachteil ist jedoch, dass sehr unpolare Materialien, beispielsweise niedrig-energetische Kunststoffe wie Polyethylen oder Polypropylen ohne Vorbehandlung der Oberfläche, in der Regel aufgrund einer schlechten Benetzung nicht mit reaktiven Schmelzklebstoffen basierend auf Polyestern oder Polyethern verklebt werden können. Für derartige Verklebungen werden üblicherweise thermoplastische oder silanmodifizierte Polyolefine benutzt. Das Problem hierbei ist, dass Polyolefine nicht mit den Polyester- und Polyether-basierten Systemen verträglich oder mischbar sind. Ebenfalls benötigt Aushärtung solcher Polyolefin-basierter Klebstoffe üblicherweise länger. Klebstoffe auf Basis von Polyestern- oder/und Polyethern und Polyolefinen zur Kombination der Vorteile beider Systeme, sind also derzeit nicht realisierbar, da die Einbindung der Polyolefine über reaktive Endgruppen aufgrund der fehlenden Verträglichkeit nicht möglich ist. Solche Systeme würden sich aufgrund von Unverträglichkeit entmischen.

Es bestand also die Aufgabe, Systeme zur Verfügung zu stellen, die die Verträglichkeit von Polyester- und/oder Polyether-Systemen mit Polyolefinen ermöglichen und damit die positiven Eigenschaften beider Systeme vereinen.

Die genannte Aufgabe wird durch den Einsatz von Block-Copolymeren gemäß der vorliegenden Erfindung gelöst. Ein erster Gegenstand der vorliegenden Erfindung ist demgemäß die Verwendung von Block-Copolymeren aus OH-, COOH oder Amino-terminierten Polymeren und Polyestern in Kleb- oder Dichtstoffen, insbesondere als Komponente zur Verbesserung der Adhäsion von Kleb- oder Dichtstoffformulierungen.

Es hat sich überraschend gezeigt, dass die Nachteile des Standes der Technik, nämlich die geringe Adhäsion von Polyester- und/oder Polyether-basierten Klebstoffsystemen, insbesondere PU-Klebstoffen, zu niederenergetischen Oberflächen, durch die Einmischung der erfindungsgemäß eingesetzten Block-Copolymere überwunden werden können. So lässt sich beispielsweise das Fügen von polaren mit unpolaren Materialien verbessern. Weiterhin bietet die erfindungsgemäße Verwendung von Block-Copolymeren aus OH-, COOH- oder Amino-terminierten Polymeren und Polyestern den Vorteil, dass die unpolaren Bausteine, beispielsweise hydroxyterminiertes Polybutadien, durch die Block-Struktur verträglich gemacht werden und mittels des Polyester beliebig und vielseitig modifizierbar sind, beispielsweise hinsichtlich Molekulargewicht, thermischen Eigenschaften sowie der Mischbarkeit mit anderen Polyestern. Die Wirkung von Block-Copolymeren aus OH-, COOH- oder Amino-terminierten Polymeren und Polyestern zur Verbesserung der Adhäsionseigenschaften auf schwierig zu verklebenden Substraten ist für den Fachmann aus dem Stand der Technik nicht bekannt, insbesondere dahingehend, dass bereits der Zusatz der Block-Copolymere für die Entfaltung deren Wirkung ausreichend ist. Darüber hinaus können durch das Einfügen von Polybutadienstrukturen in das Polyestersystem eine erhöhte Flexibilität und Elastizität des Kleb- oder Dichtstoffs bei niedrigen Temperaturen, die Aufnahme von Verunreinigungen auf Oberflächen wie Ölrückstände oder Trennmitteln sowie eine Barrierefunktion für Sauerstoff durch die Doppelbindungen des Polybutadiens erzielt werden.

In der Regel handelt es sich bei den erfindungsgemäß eingesetzten Block-Copolymeren auf Basis von OH-, COOH- oder Amino-funktionalisierten, bevorzugt terminierten, Polymeren und Polyestern um B(A)ₓ-Blocksysteme, mit A = Polyester, mit B = OH-, COOH- oder Amino-funktionalisiertes, bevorzugt terminiertes, Polymer, bevorzugt ein Polyolefin, und mit x ≥ 1. Der Wert für x spiegelt die Funktionalität des OH-, COOH- oder Amino-funktionalisierten, bevorzugt terminierten, Polymeren wieder. In der Regel liegt die Funktionalität der OH-, COOH- oder Amino-funktionalisierten, bevorzugt terminierten, Polymeren, und damit x im Bereich von 1 bis 5, vorzugsweise im Bereich von 1,5 bis 3,5, insbesondere bevorzugt im Bereich von 2 bis 3. Im Falle von x = 2, also bei OH-, COOH- oder Amino-funktionalisierten, bevorzugt terminierten, Polymeren mit einer Funktionalität von 2, handelt es sich bei den Block-Copolymeren insbesondere um ABA-Triblocksysteme. Weiterhin sind ebenfalls Block-Strukturen der Formel (AB)ₙ möglich, wobei n ≥ 1 ist. Aus US 2003/0144454 sind lediglich die sich deutlich unterscheidenden BAB-Triblockstrukturen angedeutet.

Grundsätzlich können alle dem Fachmann bekannten OH-, COOH oder Amino-funktionalisierten, bevorzugt terminierten, Polymere im Rahmen der vorliegenden Erfindung als Basis für die Block-Copolymere eingesetzt werden. Bevorzugt ist im Rahmen der vorliegenden Erfindung das Vorliegen von terminalen OH- oder Amino-Gruppen zur Bildung der Copolymere. Darüber hinaus können in den bevorzugten OH- oder Amino-terminierten Polymeren weitere OH-, COOH- oder Amino-Gruppen entlang der Kette vorliegen.

Beispiele geeigneter OH-, COOH- oder Amino-funktionalisierter Polymere sind OH-funktionalisierte Polyether wie Polyethylenglykol, Polypropylenglykol oder Polystyroloxid, OH-funktionalisierte Polycarbonate wie Polyethylencarbonat, Polypropylencarbonat oder aromatisches Polycarbonat, OH-funktionalisierte Polyethercarbonate, OH-funktionalisierte Polyester, NH₂- oder NHR- oder NR₂-funktionalisierte Polyamide, NH₂- oder NHR- oder NR₂-funktionalisierte Polyamine, OH-Gruppen tragende Poly(meth)-acrylate, OH-funktionalisiertes Polystyrol, OH-funktionalisierte Polyolefine wie OH-funktionalisiertes Polybutadien, OH-funktionalisiertes Polyisopren, OH-funktionalisiertes Polyethylen, OH-funktionalisiertes Polypropylen sowie COOH-funktionalisierte Polyester. Bevorzugte OH-funktionalisierte Polymere sind OH-terminierte Polymere, insbesondere OH-terminiertes Polystyrol sowie OH-terminierte Polyolefine, insbesondere OH-terminiertes Polybutadien. Ganz besonders bevorzugt handelt es sich bei dem OH- oder Amino-terminierten Polymeren um OH-terminiertes Polybutadien.

Im Rahmen der vorliegenden Erfindung werden, wie vorab ausgeführt, als OH-, COOH-oder Aminoterminierte Polymere insbesondere bevorzugt OH-terminierte Polybutadiene für die Herstellung der erfindungsgemäß eingesetzten Block-Copolymere eingesetzt. Diese können nicht hydriert oder auch in teilweiser oder vollständig hydrierter Form eingesetzt werden.

In einer besonders bevorzugten Ausführungsform der vorliegenden Erfindung umfasst das hydroxyterminierte Polybutadien die aus 1,3-Butadien abgeleiteten Monomereinheiten 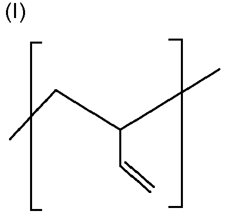 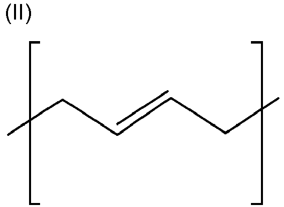 und 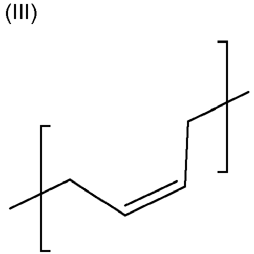 wobei der Anteil von (I) an der im Polybutadien enthaltenen aus 1,3-Butadien abgeleiteten Gesamtheit der Monomereinheiten 10 bis 60 Molprozent beträgt, und wobei die Summe der Anteile von (II) und (III) an der Gesamtheit der im Polybutadien enthaltenen aus 1,3-Butadien abgeleiteten Monomereinheiten 40 bis 90 Molprozent beträgt.

Bei dem vorab genannten hydroxyterminierten Polybutadien handelt es sich um ein durch radikalische Polymerisation von 1,3-Butadien erzeugtes Polybutadien mit Hydroxygruppen, jeweils umfassend die im Polybutadien enthaltenen aus 1,3-Butadien abgeleiteten Monomereinheiten (I), (II) und (III), wobei eine eckige Klammer bei der in dieser Anmeldung gewählten formelmäßigen Darstellung der im Polybutadien enthaltenen aus 1,3-Butadien abgeleiteten Monomereinheiten (I), (II) und (III) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer Hydroxygruppe verbunden ist. Die Monomereinheiten (I), (II) und (III) können dabei in beliebiger Reihenfolge im Polymer angeordnet sein. Bevorzugt ist eine statistische Anordnung.

In einer bevorzugten Ausführungsform beträgt der Anteil von (I), (II) und (III) an der Gesamtheit der im Polybutadien enthaltenen aus 1,3-Butadien abgeleiteten Monomereinheiten jeweils und unabhängig voneinander wenigstens 10 Mol-%.

Insbesondere bevorzugt beträgt der Anteil von (I) an der Gesamtheit der im Polybutadien enthaltenen aus 1,3-Butadien abgeleiteten Monomereinheiten 15 bis 30 Mol-%, der Anteil von (II) an der Gesamtheit der im Polybutadien enthaltenen aus 1,3-Butadien abgeleiteten Monomereinheiten 50 bis 70 Mol-% und der Anteil von (III) an der Gesamtheit der im Polybutadien enthaltenen aus 1,3-Butadien abgeleiteten Monomereinheiten 15 bis 30 Mol-%. Das mittlere Molekulargewicht, bestimmt durch Gelpermeationschromatographie, der hydroxyterminierten Polybutadiene liegt typischerweise zwischen 500 und 10.000 g/mol, bevorzugt zwischen 1000 und 5.000 g/mol, besonders bevorzugt zwischen 1500 und 4000 g/mol.

In einer bevorzugten Ausführungsform können neben den im Polybutadien enthaltenen aus 1,3-Butadien abgeleiteten Monomereinheiten (I), (II) und (III) auch noch andere Monomereinheiten enthalten sein, insbesondere solche, die nicht aus 1,3-Butadien abgeleitet sind. In einer bevorzugten Ausführungsform stellt die Gesamtheit der im Polybutadien enthaltenen aus 1,3-Butadien abgeleiteten Monomereinheiten (I), (II) und (III)jedoch einen Anteil an der Gesamtheit der in dem Polymer eingebauten Monomereinheiten, umfassend die aus 1,3-Butadien abgeleiteten und andere, von wenigstens 80, bevorzugt 90, noch bevorzugter 95, am bevorzugtesten 100 Molprozent dar.

Die erfindungsgemäß eingesetzten hydroxyterminierten Polybutadiene werden mittels radikalischer Polymerisation, beispielsweise durch Polymerisation von 1,3-Butadien in Anwesenheit von Wasserstoffperoxid, Wasser und einem organischen Lösungsmittel hergestellt. Geeignete Verfahren sind beispielsweise in EP 2 492 292 beschrieben.

Die im Rahmen der vorliegenden Erfindung vorzugsweise einsetzbaren Polybutadiene sind kommerziell erhältlich, beispielsweise als POLYVEST^{®} HT von der Evonik Resource Efficiency GmbH.

Die Funktionalität der eingesetzten OH-terminierten Polybutadiene liegt in der Regel im Bereich von 1 bis 5, vorzugsweise im Bereich von 1,5 bis 3,5, und insbesondere bevorzugt im Bereich von 2 bis 3. Wesentlich im Rahmen der vorliegenden Erfindung ist das Vorliegen von OH-Gruppen zur Bildung der Copolymere. Diese OH-Gruppen sind üblicherweise am Kettenende des Polybutadiens vorhanden, darüber hinaus können in den OH-terminierten Polybutadienen weitere OH-Gruppen entlang der Kette vorliegen.
Im Rahmen der vorliegenden Erfindung wird die Funktionalität bestimmt durch die Korrelation von Molekulargewicht zu OHZ.

Es ist möglich, die Funktionalität beispielsweise durch die Reaktion von Monoisocyanaten mit den OH-Gruppen einzustellen.

Neben den vorab beschriebenen OH-, COOH oder Amino-terminierten Polymeren enthalten die erfindungsgemäß eingesetzten Block-Copolymere Blöcke aus Polyestern, insbesondere basieren die Block-Copolymere auf Polyestern aus Lactonen und/oder Lactid.

Beispiele geeigneter Lactone sind insbesondere C₃-Lactone wie β-Propiolacton, C₄-Lactone wie β-Butyrolacton oder γ-Butyrolacton, C₅-Lactone wie 4-Hydroxy-3-pentensäure-gamma-lacton, α-Methylene-γ-butyrolacton, γ-Methylene-γ-butyrolacton, 3-Methyl-2(5H)-furanon, γ-Valerolacton, δ-Valerolacton, C₆-Lactone wie δ-Hexalacton, ε-Caprolacton oder γ-Hexalacton, oder weitere Lactone wie 5-Butyl-4-methyldihydro-2(3H)-furanon, δ-Octanolactone, γ-Phenyl-ε-caprolacton, Oxacyclododecan-2-on, Oxacyclotridecan-2-on, Pentadecanolid, 16-Hexadecanolid, γ-Undecalacton, δ-Undecalacton, γ-Methylene-γ-butyrolacton sowie Mischungen daraus.

Unter Lactiden werden im Rahmen der vorliegenden Erfindung zyklische Ester der Milchsäure verstanden, die in drei Isomeren vorkommen können: (S,S)-3,6-Dimethyl-1,4-dioxan-2,5-dion (CAS-Nr. 4511-42-6), (*R,R*)-3,6-Dimethyl-1,4-dioxan-2,5-dion (CAS-Nr. 25038-75-9) sowie (meso)- 3,6-Dimethyl-1,4-dioxan-2,5-dion (CAS-Nr. 13076-19-2). Keine isomere Form ist hierbei besonders bevorzugt.

Bevorzugt werden zur Herstellung der Block-Copolymere Mischungen von mindestens zwei Lactonen und/oder Lactiden verwendet, vorzugsweise Mischungen aus einem Lacton und einem Lactid, wobei Mischungen aus epsilon-Caprolacton und Lactid insbesondere bevorzugt sind. Hierdurch können die Eigenschaften der Block-Copolymere gezielt variiert werden, insbesondere bezüglich der Mischbarkeit mit anderen Polyester-Polyolen oder hinsichtlich der thermischen Eigenschaften.

Die erfindungsgemäß eingesetzten Block-Copolymere aus OH-, COOH- oder Amino-funktionalisierten Polymeren und Polyestern werden insbesondere durch OH- oder Amino-initiierte Ringöffnungspolymerisation erhalten. Dabei dienen die OH-, COOH- oder Amino-funktionalisierten Polymere als Initiator bei der Ringöffnung der Lactone und/oder Lactide, die zum Aufbau der Polyesterketten an das OH-, COOH- oder Amino-funktionalisierte Polymer führt.

Übliche homogene Katalysatoren für die Ringöffnungspolymerisation sind beispielsweise Zinn(II)-ethylhexanoat, Dibutylzinndilaurat, organische Amidinbasen wie 1,8-Diazabicyclo[5.4.0]undec-7-en, 1,5-Diazabicyclo[4.3.0]non-5-ene, 1,4-Diazabicyclo[2.2.2]octane sowie 1,5,7-Triazabicyclo[4.4.0]dec-5-ene oder Titan(IV)-Alkoholate wie Tetramethyltitanat, Tetrabutyltitanat, Tetraisopropyltitanat, Tetraphenyltitanat, Dibutyltriethanolamintitanat, Tetrahexyltitanat oder Triethanolaminatoisopropyltitanat.

Die Ringöffnungsreaktion wird normalerweise bei Temperaturen von 20 - 250 °C durchgeführt, insbesondere in einem Zeitraum von 1 - 20 Stunden, wahlweise in der Schmelze oder in Anwesenheit von Lösungsmitteln.

Die molaren Verhältnisse von Lacton und/oder Lactid zu OH-, COOH- oder Amino-Gruppen-haltigen Polymeren betragen üblicherweise 1:1 bis 200:1.

Die Konzentration an Hydroxylendgruppen der erfindungsgemäß eingesetzten Block-Copolymere, titrimetrisch nach DIN 53240-2 bestimmt, liegt zwischen 0 und 300 mg KOH /g, bevorzugt zwischen 5 und 50 mg KOH /g.

Die Konzentration an Säureendgruppen der erfindungsgemäß eingesetzten Block-Copolymere, bestimmt nach DIN EN ISO 2114, liegt zwischen 0 und 50 mg KOH/g, bevorzugt jedoch unter 2 mg KOH/g.

Das zahlenmittlere Molekulargewicht der erfindungsgemäß eingesetzten Block-Copolymere beträgt 600 - 60 000 g/mol, vorzugsweise 1000 - 30 000 g/mol. Es wird nach DIN 55672-1 mittels Gelpermeationschromatographie in Tetrahydrofuran als Eluent und Polystyrol zur Kalibrierung bestimmt.

Die Funktionalität der erfindungsgemäß eingesetzten Block-Copolymere liegt in der Regel im Bereich von 1 bis 5, vorzugsweise im Bereich von 1,5 bis 3,5. Im Rahmen der vorliegenden Erfindung wird die Funktionalität bestimmt durch die Korrelation von Molekulargewicht zu OHZ.

Ein weiterer Gegenstand der vorliegenden Erfindung sind Kleb- oder Dichtstoff-Formulierungen enthaltend Block-Copolymere aus OH-, COOH- oder Amino-funktionalisierten Polymeren (Block B) und Polyestern (Block A).

Ein weiterer, bevorzugter Gegenstand der vorliegenden Erfindung sind Kleb- oder Dichtstoff-Formulierungen mindestens enthaltend (a) Block-Copolymere aus OH-, COOH- oder Amino-funktionalisierten Polymeren (Block B) und Polyestern (Block A), und (b) mindestens einer weiteren OH-, COOH- oder Amino-funktionalisierten Komponente, insbesondere OH-funktionalisierte Polyester, OH-funktionalisierte Polyether, OH-funktionalisiertes Polybutadien (z. B. POLYVEST^{®} HT), OH- und/oder COOH-funktionalisierte Poly(meth)acrylate oder Aminogruppen-funktionalisierte Polymere.

Bei den erfindungsgemäßen Kleb- oder Dichtstoff-Formulierungen handelt es sich bevorzugt um einkomponentige oder zweikomponentige, feuchtigkeits-, strahlen- oder thermisch vernetzende Polyu rethanklebstoffe.

In einer weiteren Ausführungsform handelt es sich bei den erfindungsgemäßen Kleb- oder Dichtstoff-Formulierungen um einkomponentige, durch Vulkanisierung härtbare Reaktivsysteme.

Neben den Block-Copolymeren aus OH-, COOH oder Amino-funktionalisierten Polymeren und Polyestern (a), enthalten die erfindungsgemäßen Klebstoff-Formulierungen bevorzugt mindestens eine weitere OH-, COOH- oder Amino-funktionalisierte Komponente (b), die vorzugsweise auf Polyestern, Polyethern, Poly(meth)acrylaten oder Polybutadienen basieren.

Die eingesetzten funktionalisierten Polymere (b) sind grundsätzlich frei wählbar und dem Fachmann aus dem Stand der Technik grundsätzlich bekannt.

Geeignete Polyether können beispielsweise hergestellt werden durch die anionische oder basenkatalysierte Ringöffnungspolymerisation von Epoxiden, beispielsweise Ethylenoxid, Propylenoxid, Styroloxid, Poly-THF oder Mischungen hieraus.

Bevorzugt wird ein Polyester oder OH-funktionalisiertes Polybutadien als Komponente (b) eingesetzt, besonders bevorzugt ein Polyester. In einer bevorzugten Ausführungsform der vorliegenden Erfindung ist der mindestens eine Polyester (b) ausgewählt aus Polyestern, die vorzugsweise durch Schmelzekondensation von Di-oder Polyolen und Di- oder Polycarbonsäuren bzw. deren Derivaten synthetisiert werden, oder die durch Ringöffnungspolymerisation hergestellt wurden.

Im Hinblick auf die Di- oder Polyole und Di- oder Polycarbonsäuren gibt es grundsätzlich keine Einschränkungen und es können grundsätzlich alle Mischungsverhältnisse auftreten. Die Auswahl richtet sich nach den gewünschten physikalischen Eigenschaften des Polyesters. Diese können bei Raumtemperatur fest und amorph, flüssig und amorph oder/und (teil-)kristallin sein.

Als Di- oder Polycarbonsäuren können sämtliche dem Fachmann bekannten organischen Säuren mit zwei oder mehr enthaltenen Carboxyfunktionalitäten eingesetzt werden. Unter Carboxyfunktionalitäten werden im Sinne der vorliegenden Erfindung auch deren Derivate, beispielsweise Ester oder Anhydride, verstanden.

Bei den Di- oder Polycarbonsäuren kann es sich insbesondere um aromatische oder um gesättigte oder ungesättigte aliphatische oder gesättigte oder ungesättigte cycloaliphatische Di- oder Polycarbonsäuren handeln. Bevorzugt werden bifunktionelle Dicarbonsäuren eingesetzt.
Beispiele für geeignete aromatische Di- oder Polycarbonsäuren und deren Derivate sind Verbindungen wie Dimethylterephthalat, Terephthalsäure, Isophthalsäure, Naphthalindicarbonsäure und Phthalsäureanhydrid.
Beispiele linearer aliphatischer Di- oder Polycarbonsäuren umfassen Oxalsäure, Dimethyloxalat, Malonsäure, Dimethylmalonat, Bernsteinsäure, Dimethylsuccinat, Glutarsäure, Dimethylglutarat, 3,3-Dimethylglutarsäure, Adipinsäure, Adipinsäuredimethylester, Pimelinsäure, Korksäure, Azelainsäure, Dimethylazelat, Sebacinsäure, Dimethylsebacat, Undecandicarbonsäure, 1,10-Decandicarbonsäure, 1,12-Dodecandicarbonsäure, Brassylsäure, 1,14-Tetradecandicarbonsäure, 1,16-Hexadecandisäure, 1,18-Octadecandisäure, Dimerfettsäuren und Mischungen daraus. Beispiele ungesättigter linearer Di- und/oder Polycarbonsäuren umfassen Itaconsäure, Fumarsäure, Maleinsäure oder Maleinsäureanhydrid.
Beispiele gesättigter cycloaliphatischer Di- und/oder Polycarbonsäuren umfassen Derivate von 1,4-Cyclohexandicarbonsäuren, 1,3-Cyclohexandicarbonsäuren und 1,2-Cyclohexandicarbonsäuren.

Die Art der für die Herstellung der Polyester eingesetzten Diole oder Polyole ist an sich beliebig. Unter Polyolen sind Verbindungen zu verstehen, die bevorzugt mehr als zwei Hydroxylgruppen tragen. So können lineare oder verzweigte aliphatische und/oder cycloaliphatische und/oder aromatische Diole oder Polyole enthalten sein.
Beispiele für geeignete Diole oder Polyole sind Ethylenglykol, Propandiol-1,2, Propandiol-1,3, Butandiol-1,4, Butandiol-1,3, Butandiol-1,2, Butandiol-2,3, Pentandiol-1,5, Hexandiol-1,6, Octandiol-1,8, Nonandiol-1,9, Dodecandiol-1,12, Neopentylglykol, Butylethylpropandiol-1,3, Methylpropandiol-1,3, Methylpentandiole, Cyclohexandimethanole, Tricylclo-[2.2.1]-decandimethanol, Isomere des Limonendimethanols, Isosorbit, Trimethylolpropan, Glycerin, 1,2,6-Hexantriol, Pentaerythrol, Polyethylenglykol, Polypropylenglykol und Mischungen daraus.
Unter aromatischen Diolen oder Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Diole oder Polyole können auch Etherdiole, d. h. Oligomere bzw. Polymere, z. B. auf Basis Ethylenglykol, Propylenglykol oder Butandiol-1,4 enthalten sein.
Bevorzugt werden bifunktionelle Diole und Dicarbonsäuren eingesetzt.

Auch Polyole oder Polycarbonsäuren mit mehr als zwei funktionellen Gruppen, wie beispielsweise Trimellitsäureanhydrid, Trimethylolpropan, Pentaerythrol oder Glycerin können eingesetzt werden. Außerdem können Lactone und Hydroxycarbonsäuren als Bestandteile des Polyesters verwendet werden.

Die Konzentration an Hydroxylendgruppen, titrimetrisch nach DIN 53240-2 bestimmt, liegt zwischen 0 und 300 mg KOH /g, bevorzugt zwischen 5 und 150 mg KOH /g, besonders bevorzugt 20 und 100 mg KOH /g.
Die Konzentration an Säureendgruppen, bestimmt nach DIN EN ISO 2114, liegt zwischen 0 und 300 mg KOH/g, bevorzugt jedoch unter 2 mg KOH/g.

Das zahlenmittlere Molekulargewicht der erfindungsgemäß eingesetzten Polyester beträgt 500 - 30 000 g/mol, vorzugsweise 1000 - 20 000 g/mol. Es wird nach DIN 55672-1 mittels Gelpermeationschromatographie in Tetrahydrofuran als Eluent und Polystyrol zur Kalibrierung bestimmt.

In einer bevorzugten Ausführungsform der vorliegenden Erfindung handelt es sich bei den Kleb- oder Dichtstoff-Formulierungen um Klebstoff-Formulierungen, insbesondere um thermoplastische Schmelzklebstoffe, die rein physikalisch aushärten. In einer weiteren, besonders bevorzugten Ausführungsform der vorliegenden Erfindung handelt es sich bei den Klebstoff-Formulierungen um einkomponentige oder zweikomponentige, feuchtigkeits-, strahlen- oder thermisch vernetzende Polyurethanklebstoffe, wobei reaktive Schmelzklebstoffe (Reaktive Hotmelts, RHM), die zusätzlich chemisch vernetzen, vorzugsweise feuchtigkeitshärtende Schmelzklebstoffe, insbesondere bevorzugt sind.

In einer weiteren bevorzugten Ausführungsform der vorliegenden Erfindung handelt es sich bei den Kleb- und Dichtstoffformulierungen um einkomponentige, durch Vulkanisierung härtbare Reaktivsysteme.

Der Anteil der erfindungsgemäß eingesetzten Block-Copolymere aus OH-, COOH- oder Amino-funktionalisierten Polymeren (Block B) und Polyestern (Block A) an der Formulierung beträgt, bezogen auf die gesamte Formulierung, 1 - 99 Gewichtsprozent, bevorzugt 5-85 Gewichtsprozent, insbesondere bevorzugt 5-75 Gewichtsprozent und besonders bevorzugt 10 - 70 Gewichtsprozent.

In bevorzugten Ausführungsformen sind in den Schmelzklebstoffen neben den erfindungsgemäß eingesetzten Block-Copolymeren aus OH-, COOH- oder Amino-funktionalisierten Polymeren (Block B) und Polyestern (Block A) (a) und mindestens einer weiteren OH-, COOH- oder Amino-funktionalisierten Komponente (b), die vorzugsweise auf Polyestern, Polyethern, Poly(meth)acrylaten oder Polybutadienen basieren, noch weitere Polyole vorhanden, unter denen beispielsweise Polyesterpolyole, Polyetherpolyole und beliebige hydroxylfunktionelle Komponenten zu verstehen sind. Die Wahl dieser Polyole ist an sich beliebig.

Beispiele für beliebige hydroxyfunktionelle Komponenten sind funktionalisierte (H acide) thermoplastische Polyurethane (TPU) oder Ethylen-Vinylacetatcopolymere (EVA).

Die erfindungsgemäßen reaktiven 1 K Kleb- und Dichtstoffformulierungen werden durch die Umsetzung der Polyolmischung mit Polyisocyanaten erhalten. In den 1K Kleb- und Dichtstoffen beträgt in der Regel das OH:NCO-Verhältnis von Polyester zu Isocyanat 1 : 1,2 bis 1 : 5,0, vorzugsweise von 1 : 1,5 bis 1 : 3,5. In den 2K Kleb- und Dichtstoffen beträgt in der Regel das OH:NCO-Verhältnis von Polyol-Komponenten zu Isocyanat 1 : 0,8 bis 1 : 5,0, vorzugsweise von 1 : 1,0 bis 1 : 1,5 , und besonders bevorzugt 1 : 1,1.

Die Polyisocyanate können di- und/oder multifunktionelle, aromatische, aliphatische und/oder cycloaliphatische Isocyanate sowie carbodiimidmodifizierte Isocaynate oder isocyanatterminierte Präpolymere sein. Aromatische Polyisocyanate sind besonders bevorzugt. Beispiele für Polyisocyanate sind 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat und Mischungen daraus. Insbesondere handelt es sich um 4,4'-Diphenylmethandiisocyanat und Mischungen aus 4,4'-Diphenylmethandiisocyanat und 2,4'-Diphenylmethandiisocyanat.

Anstelle von Polyisocyanaten können die erfindungsgemäßen Block-Copolymere durch eine stufenweise Umsetzung mit Polyisocyanaten zu isocyanatterminierten Präpolymeren und anschließender Reaktion mit Organosilanen oder durch eine Umsetzung mit einem Addukt aus Polyisocyanaten und Organosilanen erfolgen. Im einfachsten Fall erfolgt die Umsetzung der Polyester mit einem Isocyanatoalkylsilan in einem OH/ NCO-Verhältnis von 1:1 bis 1:1,5. Beispiele für Organosilane sind Aminopropyltrimethoxysilan, Aminopropyltriethoxysilan, N-Methyl-Aminopropyltrimethoxysilan, N-Cyclohexyl-Aminopropyltrimethoxysilan, N-Phenyl-Aminopropyltrimethoxysilan Mercaptopropyltrimethoxysilan, Mercaptotriethoxysilan.

Ebenfalls können die erfindungsgemäßen Block-Copolymere für strahlenhärtende Systeme genutzt werden. Hierzu können die erfindungsgemäßen Block-Copolymere durch eine stufenweise Umsetzung mit Polyisocyanaten zu isocyanatterminierten Präpolymeren und anschließender Reaktion mit beispielsweises einem OH-Gruppenhaltigen (Meth)-Acrylat oder durch eine Umsetzung mit einem Addukt aus Polyisocyanaten und einem OH-Gruppenhaltigen (Meth)-Acrylat erfolgen. Im einfachsten Fall erfolgt die Umsetzung der Polyester mit einem Isocyanatoacrylat in einem OH/ NCO-Verhältnis von 1:1 bis 1:1,5. Beispiele für OH-Gruppenhaltige (Meth)-Acrylate sind 2-Hydroxyethyl-(meth)acrylat, Hydroxypropyl-(meth)acrylat, 3-(Acryloyloxy)-2-hydroxypropyl-(meth)acrylat oder 4-Hydroxybutyl-(meth)acrylat.

Außer den erfindungsgemäß eingesetzten Block-Copolymeren aus OH- oder Amino-terminierten Polymeren (a), und mindestens einer weiteren OH-, COOH- oder Amino-funktionalisierten Komponente (b) kann die Klebstoffformulierung bis zu 50 Gew.-%, bezogen auf die gesamte Formulierung, an weiteren Additiven enthalten.

Diese Zusätze können sein: nichtfunktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel.

Die erfindungsgemäßen durch Vulkanisierung härtenden Reaktivsysteme werden durch die Umsetzung der erfindungsgemäß eingesetzten Block-Copolymere mit mindestens einem Vulkanisierungsmittel erhalten.

Geeignete Vulkanisierungsmittel können beispielsweise Schwefel, peroxidische Vulkanisierungsmittel, Chinone, Chinondioxime und/oder Dinitrosobenzole sein.

In einer bevorzugten Ausführungsform der vorliegenden Erfindung enthalten die Kleb-oder Dichtstoff-Formulierungen eine Mischung aus Block-Copolymeren basierend auf hydroxy-funktionellem Polybutadien (Block B) und Polyestern (Block A) als Komponente (a), insbesondere 5 - 75 Gew-%, bezogen auf die Summe der Komponenten (a) und (b), sowie mindestens einen Polyester als Komponente (b), insbesondere 25 - 95 Gew-%, bezogen auf die Summe der Komponenten (a) und (b), sowie mindestens ein Polyisocyanat, wobei das NCO:OH-Verhältnis von Polyol zu Isocyanat 2,0 - 3,5 beträgt. Die Formulierung kann optional bis zu 50 Gew-% Füllstoffe enthalten.

In einer weiteren bevorzugten Ausführungsform der vorliegenden Erfindung enthalten die Kleb- oder Dichtstoff-Formulierungen eine Mischung aus Block-Copolymeren basierend auf hydroxy-funktionellem Polybutadien (Block B) und Polyestern (Block A) als Komponente (a), insbesondere 5 - 75 Gew-%, bezogen auf die Summe der Komponenten (a) und (b), sowie mindestens eine hydroxy-funktionelles Polybutadien als Komponente (b), insbesondere 25-95 Gew-%, bezogen auf die Summe der Komponenten (a) und (b), sowie mindestens ein Polyisocyanat, wobei das NCO:OH-Verhältnis von Polybutadien zu Isocyanat 2,0 - 3,5 beträgt. Die Formulierung kann optional bis zu 50 Gew-% Füllstoffe enthalten.

In einer weiteren bevorzugten Ausführungsform der vorliegenden Erfindung enthalten die Kleb- oder Dichtstoff-Formulierungen Block-Copolymere basierend auf hydroxy-funktionellem Polybutadien (Block B) und Polyestern (Block A) als Komponente (a), sowie optional eine weitere, Doppelbindungen enthaltende Komponente (b), sowie mindestens ein Vulkanisationsmittel. Die Formulierung kann optional bis zu 70 Gew-% Füllstoffe oder/und andere Additive enthalten.

Die vorab beschriebenen Klebstoffsysteme können abhängig von der Viskosität der jeweiligen Formulierung bei Temperaturen zwischen Raumtemperatur und 200 °C, bevorzugt zwischen 80 und 150 °C, appliziert werden.

Ein weiterer Gegenstand der vorliegenden Erfindung ist die Verwendung von Kleb- oder Dichtstoff-Formulierungen gemäß der vorliegenden Erfindung zur Verklebung oder Abdichtung von Substraten, insbesondere zur Verklebung und Abdichtung von unpolaren Substraten.

Die erfindungsgemäßen Schmelzklebstoffe eignen sich in besonderer Weise zur Herstellung von Verklebungen einer Vielzahl von Substraten, z. B. Kunststoffe, Metalle, Holzarten, mineralische Untergründe wie z. B. Asphalt, Beton, insbesondere zur Verklebung von metallischen Substraten, Textilien und ganz besonders zur Verklebung diverser Kunststoffe. Die Art und der Umfang der Verklebung sind dabei nicht limitiert.

Überraschenderweise eignen sich die erfindungsgemäßen Formulierungen für den Einsatz bei unpolaren Oberflächen.

In einer bevorzugten Ausführungsform handelt es sich bei den erfindungsgemäß verklebten Substraten um Substrate mit einer Oberflächenspannung unter 40 mN/m, bevorzugt unter 35 mN/m, beispielsweise Polyethylen oder Polypropylen.

In einer weiteren bevorzugten Ausführungsform handelt es sich bei den erfindungsgemäß verklebten Substraten um ölige Substrate. Unter öligen Substraten sind solche Untergründe zu verstehen, die auf der Oberfläche natürliche, synthetische oder mineralische Öle enthalten. Dabei können die öligen Substanzen durch Verarbeitungsschritte auf die Substrate gelangen (z. B. Ziehfette, Wachse, Trennmittel etc.) bzw. in die Substrate gelangen oder sie können aus dem Substrat an die Oberfläche gelangen (z. B. Ölhaltige Holzarten wie beispielsweise Meranti-Holz).

Vorzugsweise handelt es sich bei den Verklebungen um Verklebungen in der Holz- und Möbelindustrie (beispielsweise Montageverklebung sowie die Kaschierung und Laminierung von Dekorfolien auf Faserplatten), im Automobilbereich (beispielsweise Kaschierungen von Folien oder Textilien auf Türseitenteilen, Dachhimmel, die Sitzherstellung sowie Retainerverklebungen, Anbauteile im (semi)-strukturellen Bereich, faserverstärkten Verbundwerkstoffen oder/und Metalle), in der Bauindustrie, Schuhindustrie und Textilindustrie (beispielsweise silikonisierte oder hydrophobierte Textilien) sowie im Fensterbau (beispielsweise zur Profilummantelung). Weiterhin eignen sich die erfindungsgemäßen Klebstoffe in der Verpackungsindustrie, als Dichtstoffe sowie als Beschichtungsmaterial.

Die erfindungsgemäßen Schmelzklebstoffe eignen sich sowohl für den Einsatz in einkomponentigen als auch in zweikomponentigen Systemen.
Bei den einkomponentigen Klebstoffen erfolgt die Herstellung der Mischung zeitlich unabhängig vom Klebstoffauftrag, üblicherweise zu einem deutlich früheren Zeitpunkt. Nach dem Auftrag des erfindungsgemäßen Klebstoffs erfolgt die Härtung beispielsweise durch Feuchtigkeit oder thermisch induzierte Reaktion der im Klebstoff enthaltenen Reaktionspartner.
Bei den zweikomponentigen Klebstoffen wird die Mischung unmittelbar vor Klebstoffauftrag hergestellt.

Die erfindungsgemäßen Klebstoff-Formulierungen können durch alle bekannten Methoden appliziert werden, z. B. Extruder, Raupe, Düse, Streichen, Tauchen, Spritzen, Gießen, Walzen, Sprühen, Drucken, Wischen, Waschen, Trommeln, Zentrifugieren, Pulver (elektrostatisch).

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

### Messmethoden:

### 1. Gelpermeationschromatographie

Das zahlenmittlere Molekulargewicht der im Rahmen der vorliegenden Erfindung eingesetzten Block-Copolymere oder Polyester wird nach DIN 55672-1 mittels Gelpermeationschromatographie in Tetrahydrofuran als Eluent und Polystyrol zur Kalibrierung bestimmt.

### 2. Dynamische Differenzkalorimetrie

Die Bestimmung der thermischen Eigenschaften der im Rahmen der vorliegenden Erfindung eingesetzten Block-Copolymere oder Polyester erfolgt durch Dynamische Differenzkalorimetrie (DSC) nach der DSC-Methode DIN 53765.

### 3. OHZ

Die hergestellten Block-Copolymere besitzen Hydroxylgruppen als Endgruppen. Die Konzentration der OH-Gruppen wird nach DIN 53240-2 titrimetisch in mgKOH / g Polymer bestimmt.

### 4. Zugscherfestigkeit

Die Klebeigenschaften der hergestellten Klebstoff-Formulierungen wird anhand der Zugscherfestigkeit nach DIN EN 1465 in N/mm² gemessen.

### Synthese Block-Copolymer P1

225 g POLYVEST^{®} HT (hydroxyterminiertes Polybutadien der Fa. Evonik Resource Efficiency GmbH) wurden mit 525 g ε-Caprolacton und 0.75 g eines Titankatalysators unter Stickstoffstrom in einen 1 l Mehrhalskolben mit Rückflusskühler vermengt. Anschließend wurde die Mischung unter stetem Stickstoffstrom auf 160 °C für 6 Stunden erhitzt. Die GPC-Analyse des Block-Copolymers ergibt ein mittleres Molekulargewicht *M*ₙ von 9000 g/mol bei einem PDI von 2,6, die DSC-Analyse ergibt einen Schmelzpunkt von 55 °C. Die OHZ des Polymers beträgt 17 mg KOH/g Polymer.

### Synthese Block-Copolymer P2

225 g POLYVEST^{®} HT wurden mit 262,5 g ε-Caprolacton, 262,5 g Lactid und 0.75 g eines Titankatalysators unter Stickstoffstrom in einen 1 l Mehrhalskolben mit Rückflusskühler vermengt. Anschließend wurde die Mischung unter stetem Stickstoffstrom auf 160 °C für 6 Stunden erhitzt. Die GPC-Analyse des Block-Copolymers ergibt ein mittleres Molekulargewicht Mₙ von 6300 g/mol bei einem PDI von 3,3, die DSC-Analyse ergibt Glasübergangstemperaturen von -82 °C und -30 °C. Die OHZ des Polymers beträgt 19 mg KOH/g Polymer.

### Herstellung RHM 1

In einem 500 ml Planschliffkolben wurden 50 Gewichtsteile DYNACOLL^{®} 7360,20 Gewichtsteile DYNACOLL^{®} 7255 und 30 Gewichtsteile DYNACOLL^{®} 7255-56 aufgeschmolzen und bei 130 °C im Vakuum getrocknet. Danach wurde 4,4'-Diphenylmethandiisocyanat (Lupranat^{®} ME) in einem molaren OH/NCO-Verhältnis von 1:2,0 zugegeben und zügig homogenisiert. Zur vollständigen Umsetzung der Reaktionspartner wurde 45 Minuten bei 130 °C unter Schutzgasatmosphäre gerührt. Anschließend wurde der feuchtigkeitshärtende Schmelzklebstoff (RHM) abgefüllt.

### Herstellung RHM 2-4

Die Herstellung der Beispiele RHM 2-4 erfolgt analog Beispiel RHM 1 gemäß der in Tabelle 1 angegebenen Zusammensetzungen und Temperaturen.

**Tabelle 1 - Zusammensetzung untersuchter reaktiver Schmelzklebstoffe (RHM)**

| Bestandteile | Zusammensetzung in Gew-% bezogen auf die Polyole | | | |
|---|---|---|---|---|
| | RHM 1 (Vergleichsbeispiel) | RHM 2 (Vergleichsbeispiel) | RHM 3 (Erfindungsgemäß) | RHM 4 (Erfindungsgemäß) |
| P1 | | | 70 | |
| P2 | | | | 70 |
| DYNACOLL^{®} 7360 | 50 | 50 | | 30 |
| DYNACOLL^{®} 7255 | 20 | 20 | 30 | |
| DYNACOLL^{®} 7255-66 | 30 | | | |
| POLYVEST^{®} HT | | 30 | | |
| Lupranat^{®} ME (OH:NCO) | 1:2,0 | 1:3,0 | 1:3,0 | 1:3,0 |
| Umsetzungs-temperatur [°C] | 130 | 80 | 130 | 130 |
| Lagerstabilität | lagerstabil | Nicht lagerstabil (Entmischung) | lagerstabil | lagerstabil |

| | | | | |
|---|---|---|---|---|
| Erläuterung zur Lagerstabilität: Der RHM wird als lagerstabil bewertet, wenn nach 24 h Lagerung bei 130 °C keine makroskopische Phasentrennung auftritt. | | | | |

### Eingesetzte Rohstoffe:

- POLYVEST^{®} HT: Hydroxyterminiertes Polybutadien der Fa. Evonik Resource Efficiency GmbH) DYNACOLL^{®} 7360: Polyester mit OHZ 30 (Fa. Evonik Resource Efficiency GmbH)
- DYNACOLL^{®} 7255: Polyester mit OHZ 30 (Fa. Evonik Resource Efficiency GmbH)
- DYNACOLL 7255-66: Modifiziertes DYNACOLL^{®} 7255 mit OHZ 66 (Fa. Evonik Resource Efficiency GmbH)
- Lupranat^{®} ME: 4,4'- Diphenylmethane diisocyanate (MDI - Fa. BASF SE)

**Daten Zugscherfestigkeitsversuche**

| Substrat | RHM 1 | RHM 2 | RHM 3 | RHM 4 |
|---|---|---|---|---|
| Stahl entfettet | 3.8 TWC | 2,9 C | 3,7 A | 1,5 TWC |
| Stahl beölt | 0,6 A | 1,6 TWC | 2,2 A | 1,0 TWC |
| PP | 0,3 A | 0,6 A | 0,5 A | 0,8 A |
| PVC | 9,5 M | 11,5 M | 9,9 M | 11 M |
| Klebwerte (Zugscherfestigkeit in N/mm² - Art des Klebbruchs) | | | | |

Der Stahl wurde mit Aceton gereinigt und dann mit Hilfe eines Handtuchpapiers als Beispielsubstanz das Schmieröl für Vakuumpumpen N62 (Fa. Leybold) aufgetragen. Es ergab sich, dass auf eine Fläche von 15,3 x 10,0 cm eine Ölmenge von 0,0384 g aufgetragen wurde, das ergibt ca. 2,5 g/m². Vor dem Ölauftrag wurde der Stahl auf 65 °C erwärmt.

Die Zugscherfestigkeitswerte sind angegeben nach einer Lagerung der verklebten Substrate von 1 Woche in einem Klimaschrank (20 %, 65 % relative Luftfeuchtigkeit).

**Erläuterung zur Art des Bruchbilds:**

| Zeichen | Bruchbild |
|---|---|
| A | Adhäsionsbruch - Der Klebstoff wird im Versuch zur Zugscherfestigkeit von mindestens 1 Substrat rückstandslos entfernt. |
| M | Materialbruch - Die Verklebung bleibt beim Versuch zur Zugscherfestigkeit erhalten, das verklebte Material bricht |
| C & TWC | Kohäsionsbruch, teilweise Kohäsionsbruch - Beim Versuch zur Zugscherfestigkeit verbleibt Klebstoff am Substrat, der Klebstoff bricht in sich |

## Patentansprüche

1. Verwendung von Block-Copolymeren aus OH-, COOH- oder Amino-funktionalisierten Polymeren und Polyestern in Kleb- oder Dichtstoffen.

2. Verwendung gemäß Anspruch 1, **dadurch gekennzeichnet, dass** es sich bei den erfindungsgemäß eingesetzten Block-Copolymeren auf Basis von OH-, COOH- oder Amino-funktionalisierten Polymeren und Polyestern um B(A)ₓ-Blocksysteme, mit A = Polyester, mit B = OH-, COOH- oder Amino-funktionalisiertes Polymer und mit x ≥ 1 handelt.

3. Verwendung gemäß Anspruch 1 oder 2, **dadurch gekennzeichnet, dass** die OH-, COOH- oder Amino-funktionalisierten Polymere ausgewählt sind aus OH-funktionalisierten Polyethern, OHfunktionalisierten Polycarbonaten, OH-funktionalisierten Polyethercarbonaten, NH₂- oder NHR-oder NR₂-funktionalisierten Polyamiden, NH₂- oder NHR- oder NR₂-funktionalisierten Polyaminen, OH-Gruppen tragenden Poly(meth)-acrylaten, OH-funktionalisierten Polystyrol, OH-funktionalisiertem Polybutadien, OH-funktionalisierten Polyolefinen oder COOH-terminierten Polyestern.

4. Verwendung gemäß einem oder mehreren der Ansprüche 1 bis 3, **dadurch gekennzeichnet, dass** die Block-Copolymere auf Polyestern aus Lactonen und/oder Lactiden basieren.

5. Kleb- oder Dichtstoff-Formulierungen enthaltend Block-Copolymere aus OH-, COOH- oder Amino-funktionalisierten Polymeren und Polyestern.

6. Kleb- oder Dichtstoff-Formulierungen gemäß Anspruch 5, mindestens enthaltend (a) Block-Copolymere aus OH-, COOH- oder Amino-funktionalisierten Polymeren und Polyestern , und (b) mindestens einer weiteren OH-, COOH- oder Amino-funktionalisierten Komponente.

7. Kleb- oder Dichtstoff-Formulierungen gemäß Anspruch 5 oder 6, **dadurch gekennzeichnet, dass** es sich um einkomponentige oder zweikomponentige, feuchtigkeits-, strahlen- oder thermisch vernetzende Polyurethanklebstoffe handelt.

8. Kleb- oder Dichtstoffformulierungen gemäß Anspruch 5, **dadurch gekennzeichnet, dass** es sich um mittels Vulkanisierung härtbare Reaktivsysteme handelt.

9. Verwendung von Kleb- oder Dichtstoff-Formulierungen gemäß Ansprüchen 5 bis 8 zur Verklebung von Substraten.

10. Verwendung gemäß Anspruch 9, **dadurch gekennzeichnet dass** es sich bei den Substraten um unpolare Substrate handelt.

11. Verwendung gemäß Anspruch 9, **dadurch gekennzeichnet dass** es sich bei mindestens einem zu verklebendem Substrat um ein Substrat mit einer Oberflächenspannung unter 40 mN/m, bevorzugt unter 35 mN/m handelt.

12. Verwendung gemäß Anspruch 9, **dadurch gekennzeichnet dass** es sich bei den Substraten um ölige Substrate handelt.
